# EUROPEAN PATENT APPLICATION

(11) **EP 2 116 487 A1**
(43) Date of publication of application: **11.11.2009**
(21) Application number: 08155665.6
(22) Date of filing: 05.05.2008
(51) Int. Cl.: B65G 15/32, B29C 45/00, B29C 45/16, F16G 1/24, F16G 3/10, B65G 15/52, F16G 1/28, F16G 3/02, F16G 3/14

(54) **Modular conveyor belt with flexible joining member**

(71) Applicant: Habasit AG, 4153 Reinach (CH)
(72) Inventor: Fandella, Sergio, TV 31021, Mogliano Veneto (IT); Vetter, Markus, 79418, Schliengen (DE)
(74) Representative: Bohest AG

(57) **Abstract**

A modular conveyor belt (1020) comprises several rigid modules (1030) with a load side comprising a load surface (1033) and with a drive side comprising drive surfaces (1039, 1041) for a sprocket wheel. Connection parts connect the modules (1030) to adjacent modules (1030). The connection parts comprise a flexible joining member (1070) and have a load surface (1073) joining the load surfaces (1033) of the modules (1030). The modular conveyor belt (1020) advantageously does not have any spaces or gaps between the modules (1030) and joining members (1070) and this prevents the accumulation of undesirable debris between the modules (1030).

## Description

### FIELD OF THE INVENTION

The present invention relates to a modular conveyor belt for conveying systems.

### BACKGROUND OF THE INVENTION

Modular belts have modules with leading and trailing eyes, and adjacent modules are positioned such that the leading and trailing eyes are intercalated. A hinge rod is introduced through the intercalated leading and trailing eyes to connect the modules to one another to form a belt. Such belts are typically looped between drive and idler sprockets or drums, and the modules have protrusions that engage the drive sprockets such that the belt can be continuously driven.

Problems exist with respect to maintaining such modular belts in a clean and sanitary condition. For example, in the food industry meat products are commonly conveyed from one work station to the next on a conveyor belt such as the one described above. However, there are spaces between the leading and trailing eyes and rods, and these spaces provide an ideal environment for mold and bacteria growth. In addition, regardless of how often the modular belt is washed, the spaces between the leading and trailing eyes and rods are not cleaned. A thorough washing can only be accomplished by disassembling the modular belt into its individual components and washing each component separately. Disassembly of the entire modular belt results in undesirable down time and decreased productivity. Thus, there is a need for a modular belt that overcomes the problems associated with such modular belts.

An example of an endless belt design that does not have any hinges is shown in US 2004/0089519 A1. The belt described in US 2004/0089519 A1 is made of homogenous or monolithic materials and made by an extrusion process. However, there are many problems associated with this belt design. The belt material must be flexible enough to allow the belt to bend around the drive and idling drums, which is not always the case with such belts. In addition, the surface of a belt made of such an elastic or monolithic material does not resist scratches, cuts and damage associated with mechanical cutting. In addition, in the food industry, the belt surface is oftentimes subjected to cutting and impacts and the monolithic belt cannot withstand such impacts and cutting. Another problem with such a monolithic belt is that the flexibility of the belt material required to bend around the idler and driving drums results in the belt having a high longitudinal flexibility as well, which is disadvantageous when the belt is under load. Another problem associated with such flexible belts is that there is a frictional load increase. For example, these belts are drawn over supports made of wood, steel plates or steel strips, and the frictional load caused by the belt can be in excess of the frictional load generated when modular plastic belts are drawn over the supports. This has the disadvantage of energy losses, decreased working life of the belt, and limiting the maximum load on the belt.

JP 04 179614 A discloses a caterpillar comprising modules which are connected to each other by means of flexible joining members. However, there are also spaces between the modules and flexible joining members, which provide an ideal environment for mold and bacteria growth and which are not easy to thoroughly clean.

Thus, there is a need for a belt that is rodless, that does not increase friction or increase power requirements, that can withstand cutting and impact operations, that does not have increased longitudinal flexibility, and that is easy to thoroughly clean.

### SUMMARY OF THE INVENTION

The present invention meets the above-described need by providing a modular conveyor belt with a flexible joining member according to independent claim 1. Preferred embodiments will emerge from the dependent claims.

The essence of the invention consists in the following:

A modular conveyor belt comprises a rigid first module with a load side comprising a load surface and with a drive side comprising a drive surface for a sprocket wheel. The belt further comprises a rigid second module with a load side comprising a load surface and with a drive side comprising a drive surface for a sprocket wheel. A connection part connects the first module to the second module and comprises a flexible joining member. The connection part comprises a load surface joining the load surfaces of the first and second modules.

The modular conveyor belt advantageously does not have any spaces or gaps between the modules and joining members and this prevents the accumulation of undesirable debris between the modules, and also advantageously provides for an easy to clean rodless belt. Nevertheless, the disadvantages of monolithic belts are avoided.

Advantageously, the load surfaces of the first module, the second module and the connection part are in the same plane when the belt runs straight. The load surfaces form thus a plain belt surface which is optimal for conveying products and for cleaning.

Advantageously, the joining member is made of an elastic material, preferably comprising an elastomer. Such a joining member is easy to bend and reliably holds together the first and second module.

The modules advantageously comprise a hard plastic material, preferably selected from the group comprising polypropylene, polyacetal, polyethylene, and polyamide. Because the modules comprise a hard material they can optimally withstand cutting and impacts.

In a preferred embodiment of the invention, the modules have on their drive sides transverse ribs comprising at least some of the drive surfaces. This increases contact between the modules and a sprocket wheel.

It is further preferred that the joining member has a groove between a first leg and a second leg for increasing the flexibility of the joining member.

In another advantageous embodiment of the invention, the connection part further comprises a layer connecting the first module to the joining member and another layer connecting the second module to the joining member, the layers preferably being adhesive layers. In addition to adhesives, the joining can also be accomplished by, for example, a weld or a thermal bonding process, which is even preferred. A tie layer (also referred to herein as foil or foil layer) is also useable for joining the modules and joining members.

In a preferred embodiment of the invention, the modules have an angled leading side and/or an angled trailing side. The angled leading side preferably slopes downwardly and inwardly in a direction toward the trailing side, and the angled trailing side preferably slopes downwardly and inwardly in a direction toward the leading side. The angled leading and trailing sides advantageously provide for increased contact area between the modules and the flexible joining members thus enhancing the connection. The angled leading and trailing sides also make it possible to reduce the load surfaces of the flexible joining members.

In another preferred embodiment of the invention, the modules comprise a first leading wall and a recessed second leading wall with a leading contact wall extending from the first leading wall to the recessed second leading wall. The modules also comprise a first trailing wall and a recessed second trailing wall with a trailing contact wall extending from the first trailing wall to the recessed second trailing wall. The corresponding flexible joining members have opposed first and second joining member walls, opposed third and fourth joining member walls, wherein a first joining member contact wall extends from the first joining wall to the third joining member wall, and a second joining member contact wall extends from the third joining member wall to the fourth joining member wall. In this embodiment, the shape of the modules advantageously increases their contact area which advantageously enhances the connection with the joining members.

In another preferred embodiment of the invention, a first link module has a leading side and an opposed first link side having first link elements, the leading side being connected to a joining member and the joining member being connected to another one of the modules. A second link module has a trailing side and an opposed second link side having second link elements, the trailing side being connected to a joining member and the joining member being connected to another one of the modules. The first and second link elements are intercalated to hold the first and second link modules together. This embodiment advantageously provides for a way to hold the ends of a modular conveyor belt together.

Advantageously, the first and second link elements comprise first and second openings and are intercalated such that the first and second openings align and a rod is positioned in the aligned first and second openings to hold the first and second link elements together. Such a connection can be easily opened again if need be.

In an advantageous embodiment of the invention, the joining member is a flight joining member and the belt further comprises a flight that extends from the joining member. In this embodiment, the flight is advantageously easy to clean and increases the number of applications in which the belt can be used.

In a preferred embodiment of the invention, at least some of the modules have a slotted leading side having first slots and/or a slotted trailing side having second slots. Advantageously, at least some of the modules have a first opening that extends through the module such that the first opening is in communication with the first slots and a second opening that extends through the module such that the second opening is in communication with the second slots. Preferably, an elastic joining material fills the first slots and/or the first opening in one of the modules and the second slots and/or the second opening in an adjacent module such that a strong mechanical connection exists between these modules. The elastic joining material forms the flexible joining member. Instead of the mentioned slots and/or openings other structural elements, like for example projections, could be used to provide for a strong, positive connection between the modules and the flexible joining member.

The invention also includes a molding machine for making a belt according to the invention. The molding machine includes a mold having a first mold member having a first spacing wall and a second spacing wall, and a second mold member, which faces the first mold member, having a first protrusion and a second protrusion. A first cavity is defined by the first spacing wall, the first mold member, the second mold member and the first protrusion. A second cavity is defined by the second spacing wall, the first mold member, the second mold member and the second protrusion. The first cavity and the second cavity are in the shape of a module. The second mold member has a first fill passage that is connected to a reservoir of thermoplastic material and has a second fill passage that is connected to a reservoir of elastic joining material, such that when the mold is closed thermoplastic material can be introduced into the first cavity through the first fill passage. The molding machine has a third mold member having an outer wall that replaces the first mold member. An elongate module cavity is defined between the third mold member and first mold member when the mold is closed. When the mold is closed, elastic joining material is introduced into a space that extends between the layers joined to the leading and trailing sides of the modules, if any. Thus, the belt can be advantageously made in one molding machine.

There is also provided a method for making a belt according to the invention that comprises providing a mold having a first mold member and a facing second mold member. The method includes defining a first cavity by a first spacing wall, the first mold member, the second mold member and a first protrusion such that the first cavity has the shape of a module. The method further includes defining a second cavity by a second spacing wall, the first mold member, the second mold member and a second protrusion, such that the first and second cavities have the shape of a module when the mold is closed. The method also includes opening the mold and placing an already formed module in the second cavity, closing the mold, and injecting a thermoplastic material through a first passage into the first cavity to form another module. The next act is opening the mold and applying a layer to the leading and trailing sides of the modules if a layer is needed. This step is followed by providing a third mold member having an outer wall that faces the second mold member, closing the mold, and injecting a elastic material through a second passage such that the elastic material fills the space between the layers, if any. Thus, the belt can be advantageously made in one molding machine.

### BRIEF DESCRIPTION OF THE DRAWING FIGURES

Embodiments of the modular conveyor belt according to the invention are illustrated throughout the drawing figures. The same reference number is used to call out the same or similar surfaces, structures or features throughout the drawing figures of the embodiments of the invention, wherein:
Fig. 1 shows a perspective view of a section of a rodless belt having modules and joining members according to a first embodiment of the invention;
Fig. 2 shows an exploded view of a portion of the rodless belt of Fig. 1;
Fig. 3 shows a top plan view of a module of the rodless belt of Fig. 1;
Fig. 4 shows a bottom plan view of a module of the rodless belt of Fig. 1;
Fig. 5 shows a left side elevational view of a module of the rodless belt of Fig. 1;
Fig. 6 shows a perspective view, partly in broken lines, of a sprocket wheel for the rodless belt of Fig. 1;
Fig. 7 shows a front elevational view of a sprocket wheel driving the rodless belt of Fig. 1;
Fig. 8 shows a perspective view of a section of a rodless belt having modules with transverse ribs and joining members according to a second embodiment of the invention;
Fig. 9 shows a perspective view of a transverse rib module of the rodless belt of Fig. 8;
Fig. 10 shows a front elevational view of a sprocket wheel driving the rodless belt of Fig. 8;
Fig. 11 shows a perspective view of a section of rodless belt having grooved joining members according to a third embodiment of the invention;
Fig. 12 is an exploded view of a section of the rodless belt of Fig. 11 having grooved joining members;
Fig. 13 shows a perspective view of a section of a rodless belt having angled modules and angled joining members according to a fourth embodiment of the invention;
Fig. 14 shows an exploded view of a section of the rodless belt of Fig. 13 having angled modules and angled joining members;
Fig. 15 shows a perspective view of a section of a rodless belt having stepped modules and stepped joining members according to a fifth embodiment of the invention;
Fig. 16 shows an exploded view of a section of the rodless belt of Fig. 15 having stepped modules and stepped joining members;
Fig. 17 shows a perspective view of section of a belt having a module, a link module and a grooved flight joining member according to a sixth embodiment of the invention;
Fig. 18 shows an exploded view of the belt of Fig. 17 showing the module, link module and grooved flight joining member;
Fig. 19 shows a perspective view of a belt having link modules and transverse rib modules according to a seventh embodiment of the invention;
Fig. 20 shows a top perspective view of the belt of Fig. 19;
Fig. 21 shows a bottom perspective view of the belt of Fig. 19;
Fig. 22 shows an exploded view of the link modules and pivot rod of the belt of Fig. 19;
Fig. 23 shows a perspective view of a rodless belt having transverse rib modules and joining members according to an eighth embodiment of the invention, wherein the joining member material is injected between the modules at the ends of a section of the belt;
Fig. 24 shows a perspective view of a section of a rodless belt having slotted modules according to a ninth embodiment of the invention;
Fig. 25 shows a bottom perspective of the rodless belt of Fig. 24;
Fig. 26 shows a bottom perspective view of a section of the rodless belt of Fig. 24 with slots and openings for receiving elastic joining material;
Fig. 27 shows an enlarged portion of Fig. 26 showing the slots and openings of the rodless belt of Fig. 24;
Fig. 28 shows a perspective view of a section of a rodless belt having slotted modules according to a tenth embodiment of the invention;
Fig. 29 shows an exploded view of a portion of the rodless belt of Fig. 28;
Fig. 30 shows a bottom plan view of the portion of the rodless belt of Fig. 29;
Fig. 31 shows a perspective view of a section of a rodless belt having link modules according to an eleventh embodiment of the invention;
Fig. 32 shows a perspective view of the section of the rodless belt of Fig. 31 with separated link modules;
Fig. 33 shows a bottom plan view of the section of the rodless belt of Fig. 32;
Fig. 34 shows a perspective view of a section of a belt having link modules and a rod according to a twelfth embodiment of the invention;
Fig. 35 shows a perspective view of the section of the belt of Fig. 34 with separated link modules;
Fig. 36 shows a perspective view of a section of a belt having link modules and a rod according to a thirteenth embodiment of the invention;
Fig. 37 shows a perspective view of the section of the belt of Fig. 36 with separated link modules;
Fig. 38 shows a sectional view of the mold used for making the modules of the rodless belt of Fig. 1;
Fig. 39 shows a sectional view of the mold used for making the modules of the rodless belt of Fig. 1, wherein a module is placed in one of the mold cavities;
Fig. 40 shows a sectional view of the mold used for making the modules of the rodless belt of Fig. 1, wherein the material from which the module is made is injected into the other mold cavity;
Fig. 41 shows a sectional view of the mold used for making the modules of the rodless belt of Fig. 1, wherein the mold is opened and a layer is applied to the modules in the mold;
Fig. 42 shows a sectional view of the mold used for making the modules of the rodless belt of Fig. 1, wherein the material from which the joining member is made is injected between the layers that are joined to the modules; and
Fig. 43 shows a sectional view of the mold used for making the modules of the rodless belt of Fig. 1, wherein joined modules are being moved out of the mold such that another module can be formed.

### DETAILED DESCRIPTION OF THE INVENTION

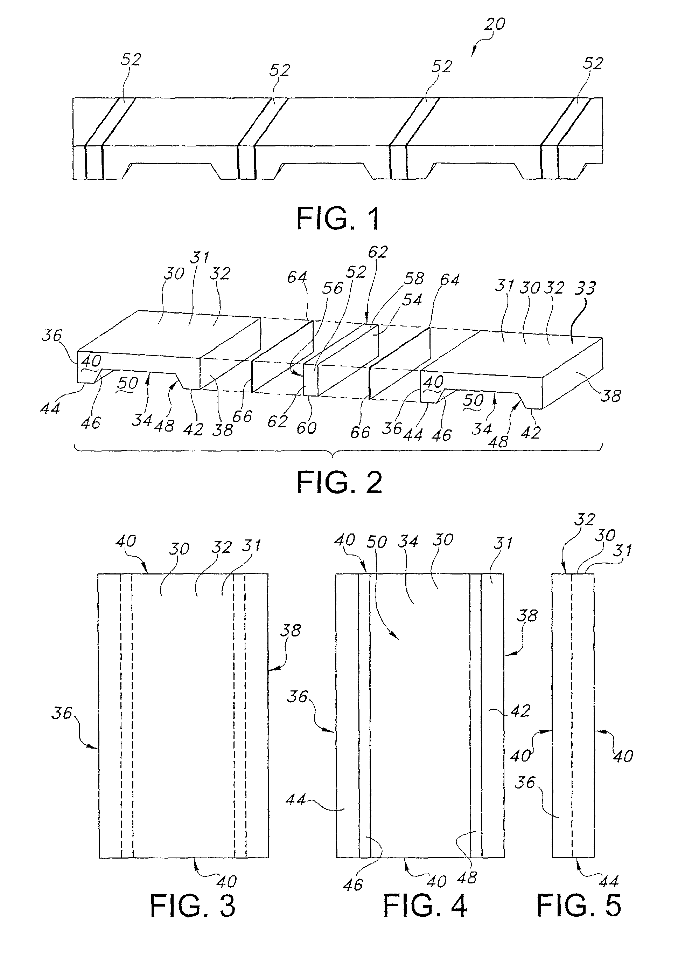

Figs. 1-5 show a first embodiment of a rodless belt 20 according to the invention. As shown in Fig. 1, the rodless belt 20 comprises rigid modules 30, and each module 30 has a body 31. The modules 30 have a generally C-shaped cross section. Each module 30 has a load side 32 comprising a load surface 33, an opposed recessed module surface 34, opposed leading and trailing sides 36, 38, respectively, and opposed outer sides commonly designated 40. The module 30 also has spaced apart first and second bases 42, 44, respectively. In one of the preferred embodiments, the leading side 36 is planar and perpendicular to the second base 44 and load side 32, and the trailing side 38 is planar and perpendicular to the first base 42 and load side 32. As shown in Figs. 2 and 4, each module has a first drive surface 46 and a second drive surface 48. The recessed module surface 34 extends from the first drive surface 46 to the second drive surface 48. Defined between the first and second drive surfaces 46, 48, respectively, and the recessed module surface 34 is a sprocket recess or recess 50. The first and second drive surfaces 46, 48, respectively, are sloped such that the sprocket recess 50 narrows as it approaches the load side 32 of the module 30. The module 30 comprises a hard thermoplastic material including polypropylene, polyacetal, polyethylene, polyamides or the like. These materials are well known to those having ordinary skill in the art. The module can also comprise other moldable materials well known to those having ordinary skill in the art.

As shown in Figs. 1 and 2, the rodless belt 20 further comprises flexible joining members in form of elastic joining members 52. Each joining member 52 has a generally rectangular box-like shape, and has opposed first and second joining sides 54, 56, respectively, a joining member load surface 58 and an opposed joining member base side 60. The joining member 52 also has opposed outer sides commonly designated 62. The joining member 52 comprises a thermoplastic elastomer such as thermoplastic polyurethanes and thermoplastic elastomers. The joining member 52 can also comprise other suitable elastomers well known to those having ordinary skill in the art.

As shown in Figs. 1 and 2, in one of the preferred embodiments positioned between each joining member 52 and each module 30 is a layer 64. In one of the preferred embodiments the layer is an adhesive layer 66. The layer 64 connects or joins the lead side 36 of one module 30 to the first joining side 54 of the joining member 52, and another layer 64 connects or joins the second joining side 56 of the joining member 52 to the trailing side 38 of the adjacent module 30. In other preferred embodiments, the lead side 36 of one module 30 is joined to the first side 54 of the joining member 52, and the second joining side 56 of the joining member 52 is joined to the trailing side 38 of the adjacent module 30 with a means for joining, for example, a weld or a thermal bonding process. Welds and thermal bonding processes are well known to those having ordinary skill in the art.

In another preferred embodiment the layer 64 is a tie layer (also referred to herein as foil or foil layer). The tie layer has an irregular surface that aids in a strong mechanical lock, because the molten material from which the joining member 52 and module 30 are made can flow into these interstitial spaces and voids. The leading and trailing sides 36, 38, and first and second joining member sides 54, 46, respectively, are suitable for the application of the tie layer. The use of the tie layer thus produces a very strong connection between the modules 30 and joining members 52. The rodless belt 20 shown in Fig. 1 is formed by using the layer 64 to connect adjacent modules 30 and joining members 52 as will be described in greater detail below. As shown in Fig. 1, the rodless belt 20 does not have any spaces or gaps between the modules 30 and joining members 52 which advantageously prevents the accumulation of undesirable debris between the modules and also advantageously provides for an easy to clean modular belt 20. In addition, because the modules 30 comprise a hard material they can advantageously withstand cutting and impacts.

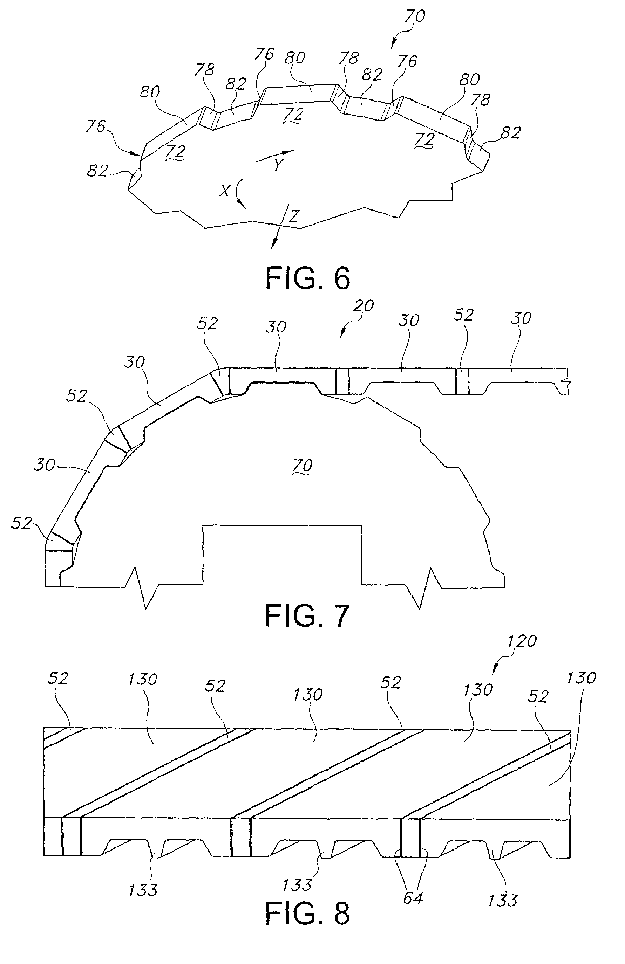

As shown in Figs. 6 and 7, the rodless belt 20 described above is looped around a drive wheel or sprocket wheel 70 having spaced apart teeth or sprockets 72 and an idler wheel (not shown). As indicated by arrows X and Y in Fig. 6, the sprocket wheel 70 is rotated about a central axis designated Z in a clockwise or counterclockwise direction by, for example, a motor (not shown). The sprockets 72 are sized to be received in the recesses 50 in the modules 30 and each sprocket 70 has a first contact surface 76, a second contact surface 78 and a elevated surface 80 that extends from the first 76 to the second contact surface 78. In addition, the first and second contact surfaces 76, 78, respectively, are sloped such that the sprockets narrow as they approach the elevated surface 80. The sprocket wheel 70 has peripheral surfaces commonly designated 82 that extend between the sprockets 72.

Reference is now made to Fig. 7 which shows the modular belt 30 looped around the sprocket wheel 70. As shown, the teeth 72 are received in the recesses 50 in the modules 30 such that the first drive surfaces 46 of the modules 30 contact the first contact surfaces 76 of the teeth 72, and the second contact surfaces 78 of the teeth 72 contact the second drive surfaces 48 of the module 30, and the elevated surfaces 80 of the teeth 72 contact the recessed module surface 34 of the modules 30. In addition, because the joining member 52 is elastic as described above, it can be advantageously deformed as is driven around the sprocket wheel 70. In particular, as shown in Fig. 7, the joining member load surfaces 58 advantageously flex outwardly and elongate as the rodless belt 20 is driven around the sprocket wheel 70, and the joining member base sides 60 advantageously compress and flex inwardly as the rodless belt 20 is driven around the sprocket wheel 70. Thus, the joining members 52 allows the rodless belt 20 to deform and bend around the drive sprocket wheel 70. The joining members 52 and modules 30 advantageously do not separate because they are strongly connected as described above.

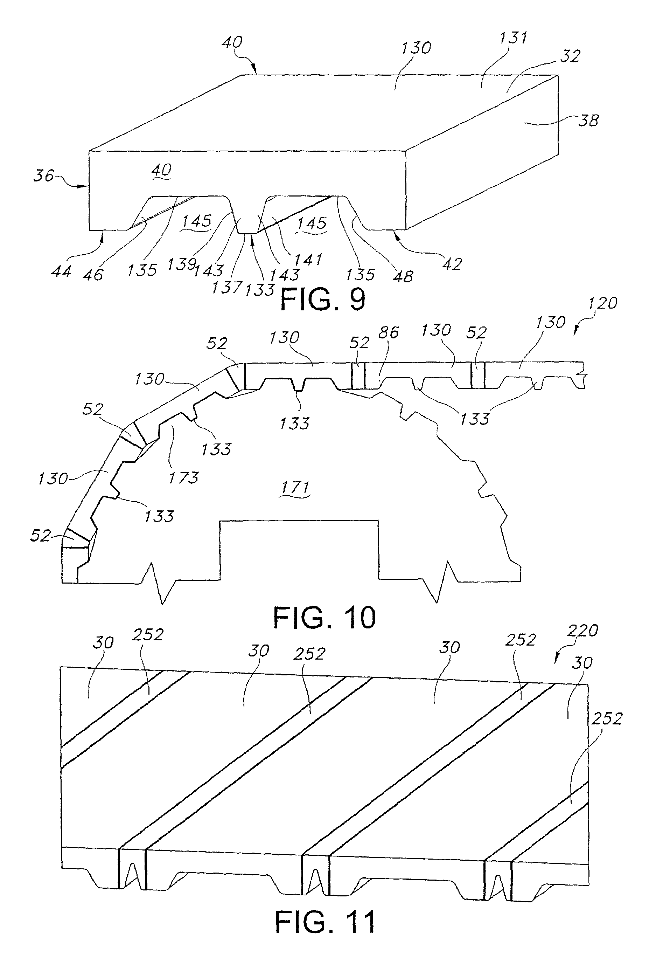

Figs. 8-10 show a second embodiment of a rodless belt 120 that has modules 130 having module bodies 131 with transverse ribs 133. Each module 130 has a load side 32 with a load surface, a pair of recessed module surfaces 135, a leading side 36 and an opposed trailing side 38, and opposed outer sides 40. The module 130 also has a first base 42 and a second base 44. As shown in Fig. 8, the transverse rib 133 has a transverse rib base 137, a first transverse rib drive surface 139, a second transverse rib drive surface 141 and opposed transverse rib outer sides 143 that are co-planer with the opposed outer sides 40. The first transverse rib drive surface 139 extends from one of the recessed module surfaces 135 to the transverse rib base 137, and the second transverse rib drive surface 141 extends from the other recessed module surface 135 to the transverse rib base 137. Recesses 145 are defined between the first drive surface 46, one of the recessed module surfaces 135 and the first transverse rib drive surface 139, and between the second drive surface 48, the other recessed module surface 135 and the second transverse rib drive surface 141. As shown in Fig. 9, the transverse rib 133 engages sprockets 173 of a sprocket wheel 171 in a manner similar to that described in connection with the first embodiment. The transverse ribs 133 advantageously provide for increased module stability and improved sprocket drive transmission as compared to that of, for example, the first embodiment described above. As shown in Fig. 8, the modules 130 are connected to one another with joining members 52 and layers 64 in the same manner as described in connection with the first embodiment.

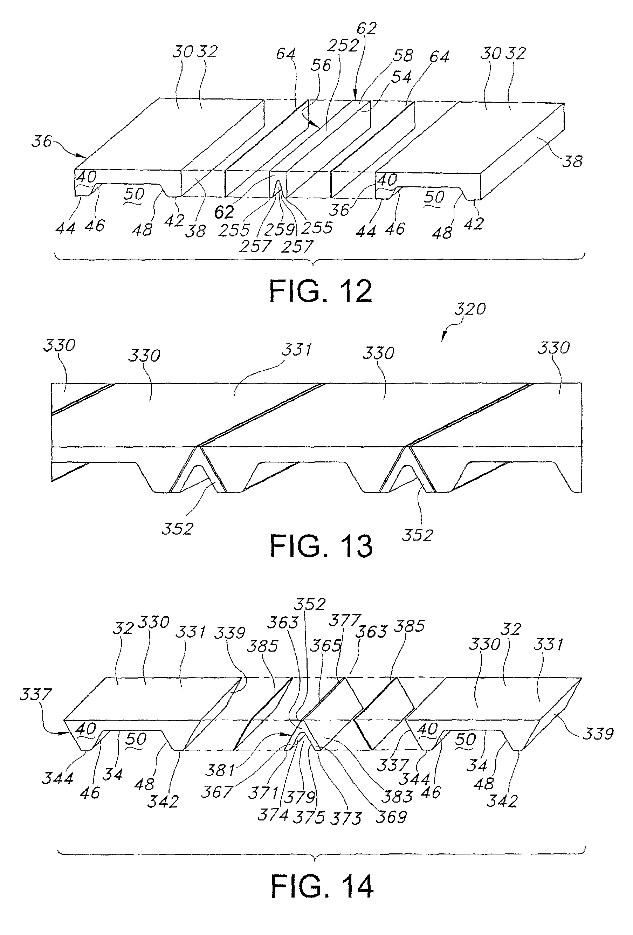

Figs. 11 and 12 show a third embodiment of a rodless belt 220 having modules 30 as described above in connection with the first embodiment, and joining members 252 having grooves or recesses 259. The joining member 252 comprises the same materials as described above in connection with the first embodiment. The joining member 252 has a generally rectangular box-like shape, opposed first and second joining sides 54, 56, respectively, and a joining member load surface 58. There are bases 255 opposite the load surface 58. The joining member 252 also has opposed outer sides commonly designated 62. The groove or recess 259 in the joining member 252 extends from one of the opposed outer sides 62 to the other opposed outer side 62, and from the bases 255 into the joining member 252. There is a pair of internal joining member surfaces commonly designated 257 that face one another and that slope in a direction toward one another as they approach the joining member load surface 58, and that define the groove or recess 259. The groove or recess 259 extends in a direction toward the joining member 252 load surface 58 and has a V-shaped cross section. The groove 259 advantageously decreases the bending stiffness of the joining member 252 allowing it to compress such that the two internal joining member surfaces 257 are capable of moving toward one another when the rodless belt 220 bends around the sprocket wheel 70 in the manner described above. The joining members 252 are connected to the modules 30 with the layer 64 in the same manner as described above in connection with the first embodiment.

Figs. 13 and 14 show a fourth embodiment of a rodless belt 320 comprising modules 330 having module bodies 331. The module 330 has a load side 32 with a load surface for supporting a load, a recessed module surface 34, an angled leading side 337 and an angled trailing side 339. The module 330 also has opposed outer sides 40. The module 330 has a first base 342 and a second base 344 and a first drive surface 46 and a second drive surface 48. The angled leading side 337 slopes inwardly in a direction toward the first base surface 342. Similarly, the angled trailing side 339 slopes inwardly in a direction toward the second base surface 344. As shown in Fig. 13, the recessed module surface 34 extends between the first drive surface 46 and the second drive surface 48. Defined between the first and second drive surfaces 46, 48, respectively, and recess module surface 34 is a recess 50 for receiving a sprocket 72 of a sprocket wheel 70 therein in the manner described above in connection with the first embodiment.

There is a joining member 352 that has opposed outer sides commonly designated 363 and a joining member load surface 365. The joining member 352 has spaced apart first and second legs 367, 369, respectively, having first and second leg bases 371, 373, respectively. In addition, the first and second legs 367, 369, respectively, have first and second internal leg surfaces 374, 375, respectively. The first and second legs 371, 373, respectively, extend from and slope in a direction toward a bendable portion 377 that is proximal the load surface 365. The joining member 352 has a groove or recess 379 that extends from the first internal leg surface 373 to the second internal leg surface 375, and from one of the opposed outer sides 363 to the other opposed outer side 363. Thus, the joining member 352 has an inverted V-shape, as shown in Figs. 13 and 14. As shown, the recess 379 narrows as it approaches the bending portion 377. The joining member 352 also has angled first and second outer joining sides 381, 383, respectively, which slope outward as they extend from the joining portion 377 and approach the first and second leg bases 371, 373, respectively.

Layers 385 that have a length equal to a length of the angled first and second outer joining sides 381, 383, respectively, join or connect the joining member 352 and modules 330 in the manner described above in connection with the first embodiment. The layers 385 are made of the same materials as described in connection with the first embodiment. In addition, because the angled leading side 337 and the angled trailing side 339 of the module 330 are sloped they advantageously have an increased surface area that makes contact with the layers 385, as compared to the vertical leading and trailing surfaces 36, 38, respectively, described in connection with the first embodiment. This increase in surface area advantageously enhances the connection between the modules 330 and joining members 352. In addition, the shape of the joining member 352 advantageously decreases the stiffness of the modular belt 320, and because the bending portion 377 has a small cross section it advantageously increases elasticity of the joining member 352 and further reduces the bending stiffness of the modular belt 320. In addition, the load surface 365 has decreased surface area as compared to the joining member load surface 58 in the first embodiment, which advantageously decreases the area of exposure of the modular belt 320 to cuts and deleterious materials. Thus, it is desirable to keep the surface area of the joining member 352 to a minimum. In addition, because the angled joining member 352 advantageously has decreased bending stiffness, it can readily bend around a sprocket wheel.

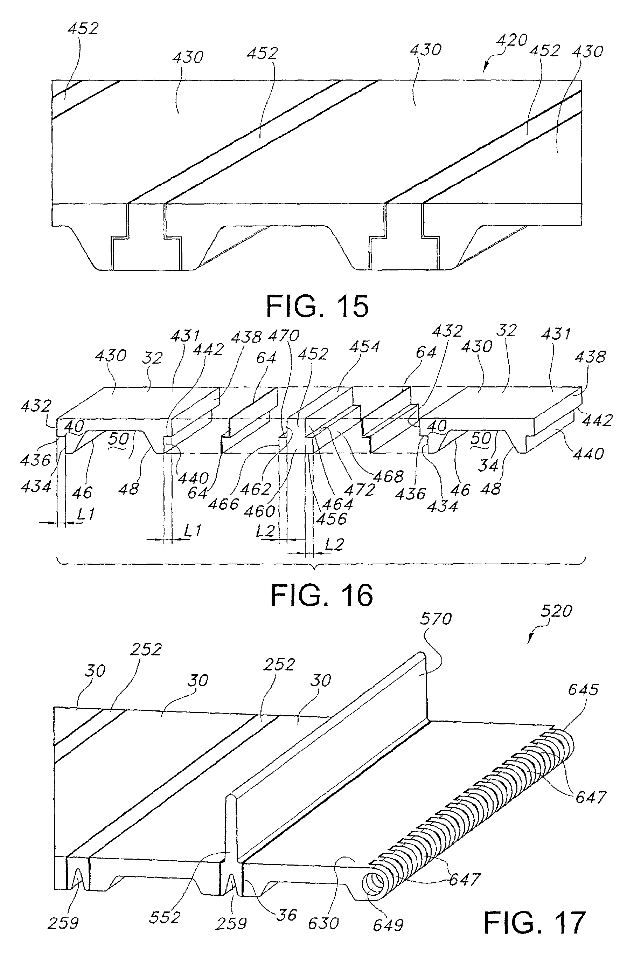

Figs. 15 and 16 show a fifth embodiment of a rodless belt 420 having modules 430 having module bodies 431. Each module 430 has a load side 32 with a load surface, a recessed module surface 34, and opposed outer sides 40. The first and second drive surfaces 46, 48, respectively, and recessed module surface 34 define a sprocket recess 50. The module 430 has a first leading wall 432 and a recessed second leading wall 434 that is recessed relative to the first leading wall 432 as shown in Figs. 15 and 16. A leading contact wall 436 extends from the first leading wall 432 to the recessed leading wall 434. The module 430 also has a first trailing wall 438 and a recessed second trailing wall 440 that is recessed relative to the first trailing wall 438. A trailing contact wall 442 extends from the first trailing wall 438 to the recessed second trailing wall 440. The leading contact wall 436 and trailing contact wall 442 have the same length which is designated L1 in Fig. 16.

As shown in Fig. 16, there is a joining member 452 that has a joining member load surface 454 and an opposed joining member base 456. The joining member 452 has opposed outer joining member walls 460, opposed first and second joining member walls 462, 464, respectively, and opposed third and fourth joining member walls 466, 468, respectively. A first joining member contact wall 470 extends from the first joining wall 462 to the third joining member wall 466, and a second joining member contact wall 472 extends from the third joining member wall 464 to the fourth joining member wall 468. Each of the first joining member contact wall 470 and second joining member contact wall 472 has a length commonly designated L2 in Fig. 16. A layer 64 is positioned between the joining member 452 and modules 430. Thus, when modules 430 and joining member 452 are made into the rodless belt 420 shown in Fig. 15, the layer 64 is positioned between the second trailing wall 438 and the first joining member wall 462, the recessed second trailing wall 440 and the third joining member wall 466, and the trailing contact wall 442 and the first joining member contact wall 470, with the layer 64 positioned therebetween. Similarly, when modules 430 and joining member 452 are made into the rodless belt 420, the layer 64 is positioned between the first leading wall 432 and second joining member wall 464, the recessed leading wall 434 and the fourth joining member wall 468, and the leading contact wall 436 and the second joining member contact wall 472, with the layer 64 positioned therebetween. Thus, there is advantageously provided increased contact area between the joining members 452 and modules 439 which enhances the connection that they make with one another.

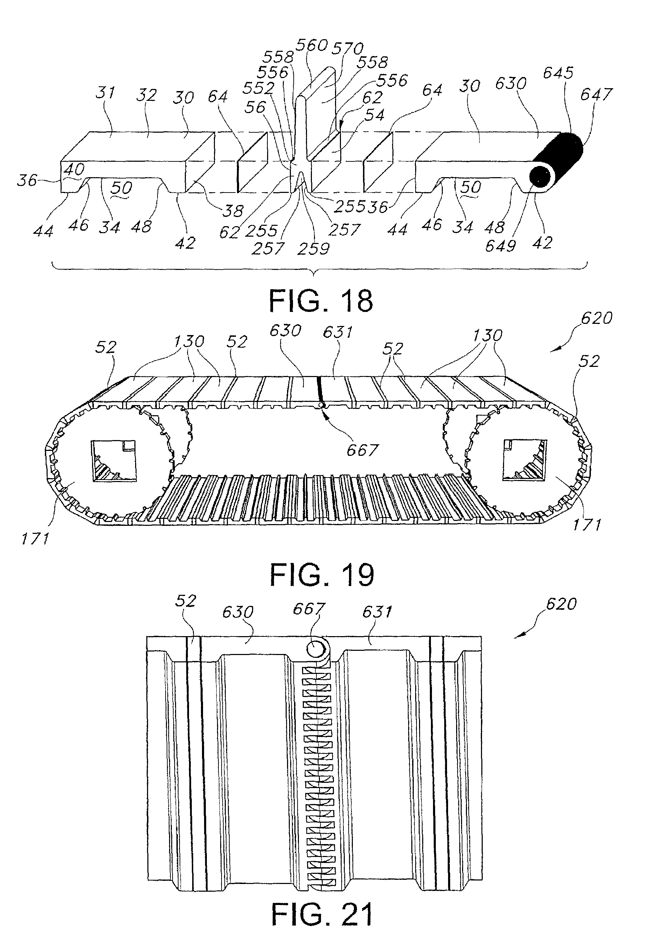

Figs. 17 and 18 show a sixth embodiment of a belt 520 that has modules 30, and each module 30 has a body 31, as described in connection with the first embodiment. As shown in Fig. 17, some of the modules 30 are connected to one another with joining members 252 as shown in Fig. 10 and fully described above in connection with the third embodiment. In this embodiment there is a flight joining member 552 that joins module 30 to a first link module 630 which will be described presently. The flight joining member 552 is the same as the joining member 252 described above in connection with the third embodiment to the extend that it has opposed first and second joining sides 54, 56, respectively, bases 255, opposed outer sides 62, and facing internal joining member surfaces commonly designated 257 that slope in a direction toward one another to define the groove or recess 259. In addition, the flight joining member 552 has spaced apart flight sides 556 opposite the bases 255, and a flight 570 that extends from the flight joining member 552 such that one of the flight sides 556 is on each side thereof. The flight 570 has opposed flight surfaces 558 that meet at an end surface 560. The flight has opposed flight outer sides 562 that are coplanar with the opposed outer sides 62. The use of flights in conveyor belt systems is well known to those having ordinary skill in the art. In other embodiments, the flight 570 can have other shapes, can be at an angle to the load side 32 of the modules 30, and the flight 570 can have any desired opening and can be reinforced. In addition, Figs. 17 and 18 also show the flight joining member 552 joining the module 30 and the first link module 630, to be described in detail presently, with layers 64. In another embodiment, the flight joining member 552 can be made without the groove 259.

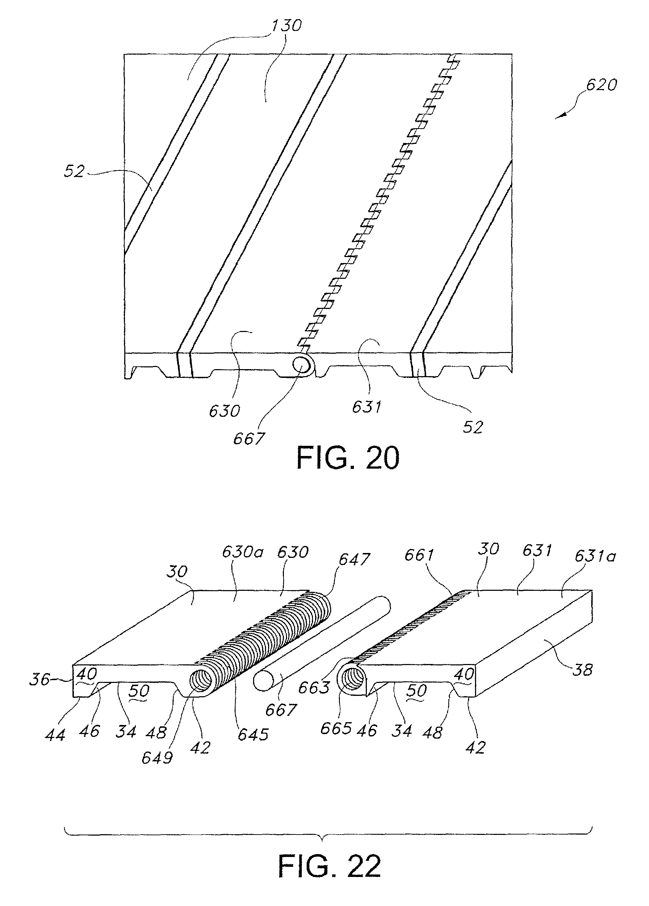

Figs. 19-22 show a seventh embodiment of a belt 620 having a first link module 630 having a first link module body 630a, and a second link module 631 having a second link module body 631a. The first and second link modules 630, 631, respectively, are part of a hingless modular belt 620 having modules 130 that have transverse ribs 133, as described in connection with the second embodiment. As shown in Fig. 22, the first link module 630 has the load side 32 with a load surface for supporting a load, recessed module surface 34 and opposed outer sides 40. The first link module 630 also has first and second bases 42, 44, respectively, and first and second drive surfaces 46, 48, respectively, with the recessed module surface 34 extending between the first and second drive surfaces 46, 48, respectively. The first link module 630 also has a leading side 36 and an opposed first link side 645. The first link side 645 has first link elements 647 and each of the first link elements 647 has a first link opening 649. The first link elements 647 are spaced apart, as shown in Figs. 17, 18 and 22. The second link module 631 has first and second bases 42, 44, respectively, and first and second drive surfaces 46, 48, respectively, with the recessed module surface 34 extending between the first and second drive surfaces 46, 48, respectively. The second link module 631 also has a trailing side 38, a first base 42 and a second base 44. Defined between the first and second drive surfaces 46, 48, respectively, and the recessed module surface 34 is the recess 50. Opposite the trailing side 38 is a second link side 661. The second link side 661 has second link elements 663 and each of the second link elements 663 has a second link opening 665. The second link elements 663 are spaced apart as shown in Fig. 22. A pivot rod 667 is provided. The first and second link modules 630, 631, respectively, are moved together such that the first and second link elements 647, 663, respectively, mesh or intercalate, and the first link openings 649 and second link openings 665 align. The pivot rod 667 is positioned in the first link openings 647 and second link openings 665 and a head is formed on the pivot rod 661 to hold the first link module 630 and the second link module 631 together. Forming heads on pivot rods is well known to those having ordinary skill in the art. The first and second link modules 630, 631, respectively, can be used in the rodless belt 620 to hold a section of a modular conveyor belt together, as shown in Figs. 19-21.

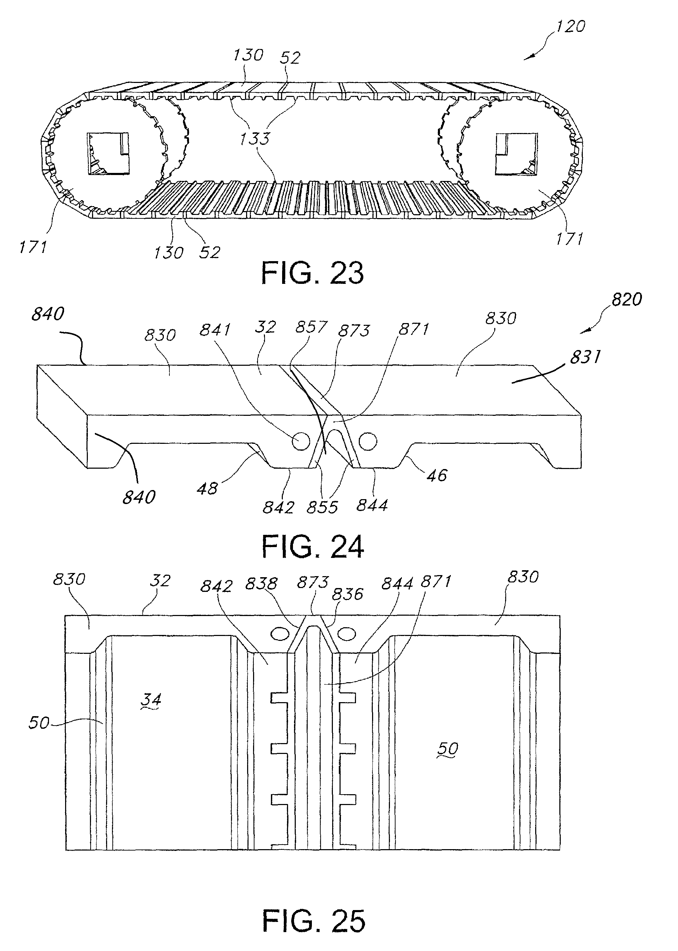

Fig. 23 shows an eighth embodiment of a rodless belt 120 formed as a one piece belt. The rodless belt 120 has modules 130 that have transverse ribs 133, as described in connection with the second embodiment. The one piece rodless belt 120 provides for a modular belt that is easy to clean. The rodless belt 120 is made by inserting the ends of a section of the rodless belt 120 into the cavities of a molding machine, and injecting the thermoplastic material to form the module 130, joining the layers 64 to the modules 130, and injecting the elastomer from which the joining member 52 is made. Such a process will be described presently.

Figs. 24-27 show a ninth embodiment of a rodless belt 820 that has modules 830 having bodies 831. The module 830 has the load side 32 with a load surface, recessed module surface 34, opposed outer sides commonly designated 840, a first base 842 and a second base 844, a slotted leading side 836 and a slotted trailing side 838, and first and second drive surfaces 46, 48, respectively. The slotted leading side 836 slopes inwardly in a direction toward the second base 844. Similarly, the slotted trailing side 838 slopes inwardly in a direction toward the first base surface 842. In another embodiment the slotted leading and trailing sides 836, 838, respectively are perpendicular to the load side 32. Defined between the first and second drive surfaces 46, 48, respectively, and recess module surface 34 is a recess 50 for receiving a sprocket 70 therein.

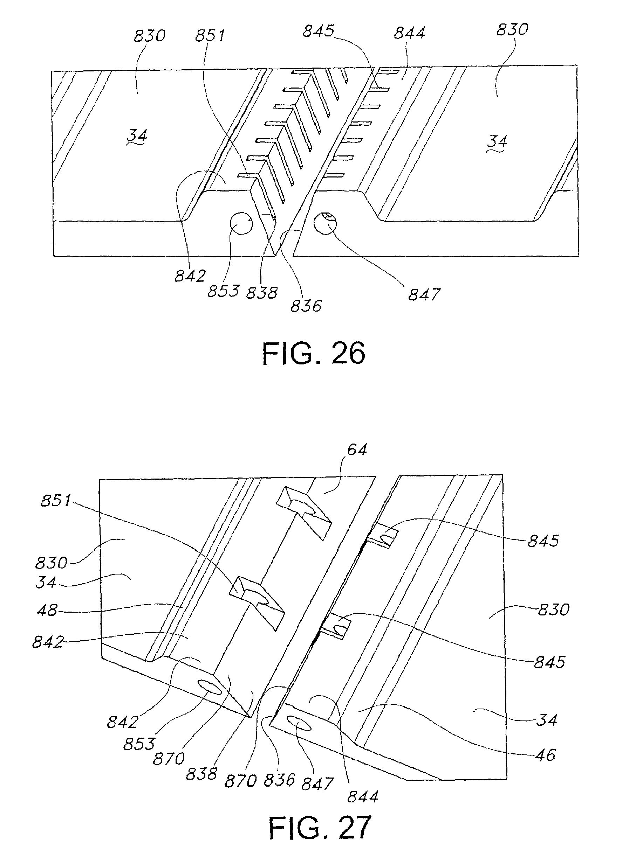

The rodless belt 820 is comprised of modules 830 that are connected to adjacent modules 830. In particular, each of the modules 830 have at least one first slot 845, and can have a plurality of first slots 845 as shown in Figs. 26 and 27. The first slots 845 extend from the slotted leading side 836 and the second base 844 into the module 830. The module 830 also has a first opening 847 that extends from one opposed outer side 840 to the other opposed outer side 840. The first opening 847 extends through the module 830 to the first slots 845 such that the first opening 847 and first slots 845 are in communication with one another. Similarly, each of the modules 830 has at least one second slot 851, and can have a plurality of second slots 851 as shown in Figs. 26 and 27. The second slots 851 extend from the slotted trailing side 838 and the first base 842 into the module 830. A second opening 853 extends from one opposed end surface 840 to the other opposed end surface 840. The second opening 853 extends through the module 830 to the second slots 851 such that the second opening 853 and second slots 851 are in communication with one another, as best shown in Fig. 27. A layer 64 is applied to facing portions, commonly designated 870, of the slotted leading side 836 and slotted trailing side 838. The layer 64 can also be omitted in an alternative embodiment. As shown in Fig. 25, molded elastic joining material 871 fills the first and second slots 845, 851, respectively, and the first and second openings 847, 853, respectively, advantageously making a virtually perfect mechanical connection between the module 830 and an adjacent module 830. There is a molded load surface 873 that advantageously has decreased surface area thus minimizing the amount of exposure to cuts and impacts. The molded elastic joining material 871 has an inverted V-shape, i.e. has a groove 857 between two legs 855, as shown in Fig. 24, which advantageously allows the rodless belt 820 to be flexible.

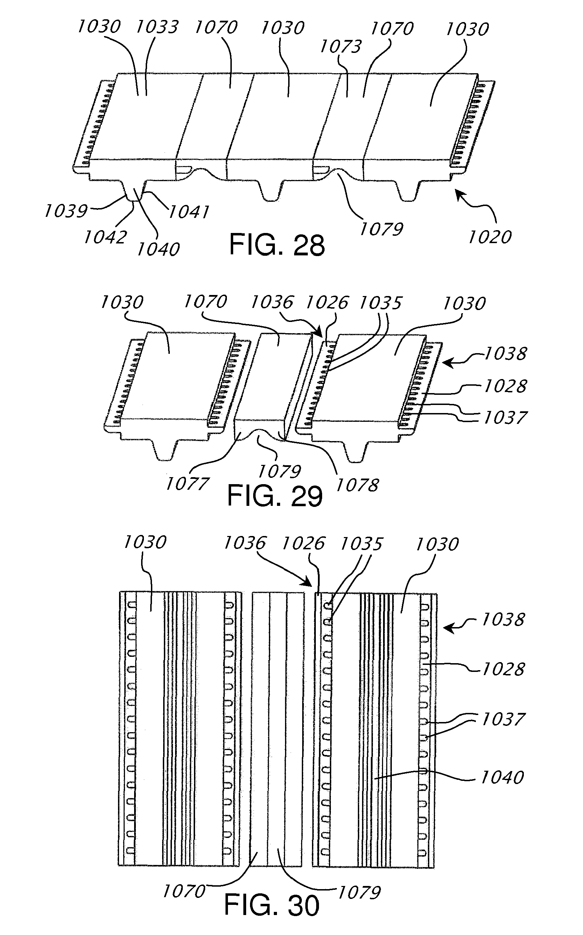

Figs. 28-30 show a tenth embodiment of a rodless belt 1020 according to the invention. As shown in Fig. 28, the modular conveyor belt 1020 comprises rigid modules 1030, which are connected by flexible joining members 1070. Each module 1030 has a load side comprising a load surface 1033, a drive side provided with transverse ribs 1040, opposed leading and trailing sides 1036, 1038, respectively, and opposed outer sides, as can be best seen in Fig. 29. Each transverse rib 1040 has a transverse rib base 1042, a first transverse rib drive surface 1039, a second transverse rib drive surface 1041 and opposed transverse rib outer sides that are co-planer with the opposed outer sides of the module body. The first transverse rib drive surface 1039 extends from the module body to the transverse rib base 1042, and the second transverse rib drive surface 1041 extends from the module body to the transverse rib base 1042. The transverse rib 1040 engages sprockets 173 of a sprocket wheel 171 in a manner similar to that described in connection with the second embodiment shown in Fig. 10. The transverse ribs 1040 advantageously provide for increased module stability and improved sprocket drive transmission.

The leading side 1036 and the trailing side 1038 of each module 1030 each have a protruding portion 1026, 1028, respectively. The protruding portions 1026, 1028 have a plurality of slots 1035, 1037, respectively, traversing the protruding portions 1026, 1028. Similar to the ninth embodiment, molded elastic joining material fills the slots 1035, 1037 and forms the flexible joining members 1070, advantageously making a virtually perfect mechanical connection between adjacent modules 1030. The joining members 1070 have load surfaces 1073 joining the load surfaces 1033 of the modules 1030, such that the load surfaces of the modules 1030 and the joining members 1070 are in the same plane when the belt 1020 runs straight, as shown in Fig. 28. The joining members 1070 have a generally rectangular box-like shape and a groove 1079 between a first leg 1077 and a second leg 1078 for increasing the flexibility of the joining member. This form of the joining member 1070 is also shown in Figs. 29 and 30, although such a separate joining member 1070 does normally not exist. The joining member 1070 gets its final form only after molding and is then connected to adjacent modules 1030, as shown in Fig. 28. It comprises for example a thermoplastic elastomer such as thermoplastic polyurethanes and thermoplastic elastomers, but can also comprise other suitable elastomers well known to those having ordinary skill in the art.

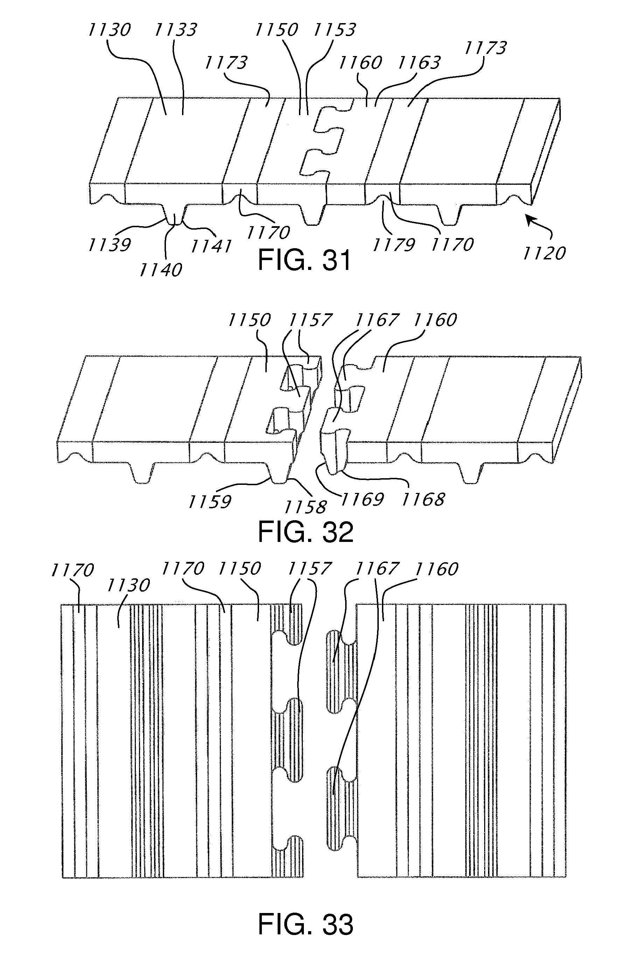

Figs. 31-33 show an eleventh embodiment of a rodless belt 1120 according to the invention. As shown in Fig. 31, the modular conveyor belt 1120 comprises rigid modules 1130, 1150 and 1160, which are connected by flexible joining members 1170. The modules 1130 and the flexible joining members 1170 are similar to the modules 1030 and the flexible joining members 1070 of the tenth embodiment. Each module 1130 has a load side comprising a load surface 1133 and a drive side provided with transverse ribs 1140. Each transverse rib 1140 has a first transverse rib drive surface 1139 and a second transverse rib drive surface 1141. Each of the modules 1150 and 1160 has a load side comprising a load surface 1153, 1163, respectively. The joining members 1170 have load surfaces 1173 joining the load surfaces 1133, 1153, 1163 of the modules 1130, 1150, 1160, a generally rectangular box-like shape and a groove 1179 between two legs for increasing the flexibility of the joining member.

The rigid module 1150 is a first link module 1150 having a leading side connected to one of the flexible joining members 1170 and an opposed first link side having several first link elements 1157. Each first link element 1157 comprises two drive surfaces 1158, 1159 for sprockets of a sprocket wheel. The rigid module 1160 is a second link module 1160 having a trailing side connected to one of the flexible joining members 1170 and an opposed second link side having several second link elements 1167. Each second link element 1167 comprises two drive surfaces 1168, 1169 for sprockets of a sprocket wheel. The first and second link elements 1157, 1167 are intercalated to hold the first and second link modules 1150, 1160 together. There is a positive connection in the direction of belt travel due to the form of the first and second link elements 1157, 1167. When intercalated, the first and second link elements 1157, 1167 form with their lower portions a transverse rib comprising the drive surfaces 1158, 1159, 1168, 1169.

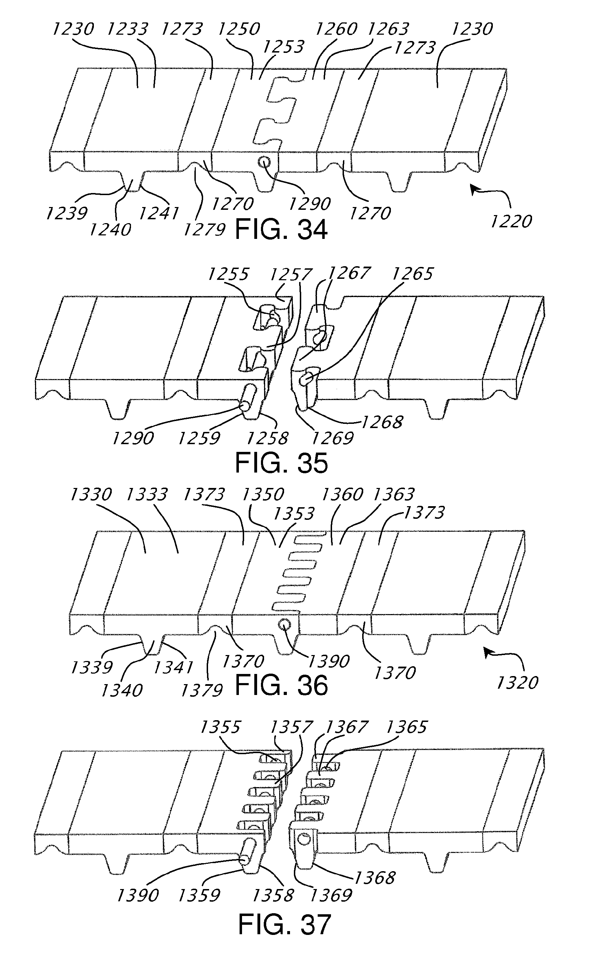

Figs. 34 and 35 show a twelfth embodiment of a modular conveyor belt 1220 according to the invention. The modular conveyor belt 1220 comprises rigid modules 1230, 1250 and 1260, which are connected by flexible joining members 1270. The modules 1230 and the flexible joining members 1270 are similar to the modules 1030 and the flexible joining members 1070 of the tenth embodiment. Each module 1230 has a load side comprising a load surface 1233 and a drive side provided with transverse ribs 1240. Each transverse rib 1240 has a first transverse rib drive surface 1239 and a second transverse rib drive surface 1241. Each of the modules 1250 and 1260 has a load side comprising a load surface 1253, 1263, respectively. The joining members 1270 have load surfaces 1273 joining the load surfaces 1233, 1253, 1263 of the modules 1230, 1250, 1260, a generally rectangular box-like shape and a groove 1279 between two legs for increasing the flexibility of the joining member.

The rigid module 1250 is a first link module 1250 having a leading side connected to one of the flexible joining members 1270 and an opposed first link side having several first link elements 1257. Each first link element 1257 comprises a first link opening 1255 for housing a locking rod 1290 and two drive surfaces 1258, 1259 for sprockets of a sprocket wheel. The rigid module 1260 is a second link module 1260 having a trailing side connected to one of the flexible joining members 1270 and an opposed second link side having several second link elements 1267. Each second link element 1267 comprises a second link opening 1265 for housing a locking rod 1290 and two drive surfaces 1268, 1269 for sprockets of a sprocket wheel. To hold the first and second link modules 1250, 1260 together, the first and second link elements 1257, 1267 are intercalated such that the first and second link openings 1255, 1265, respectively, align, and the locking rod 1290 is positioned in the link openings 1255, 1265. Advantageously, a head is formed on the locking rod 1290 to hold it in position. There is a positive connection in the direction of belt travel due to the form of the first and second link elements 1257, 1267 and due to the locking rod 1290. When intercalated, the first and second link elements 1257, 1267 form with their lower portions a transverse rib comprising the drive surfaces 1258, 1259, 1268, 1269.

Figs. 36 and 37 show a thirteenth embodiment of a modular conveyor belt 1320 according to the invention. The modular conveyor belt 1320 comprises rigid modules 1330, 1350 and 1360, which are connected by flexible joining members 1370. The modules 1330 and the flexible joining members 1370 are similar to the modules 1030 and the flexible joining members 1070 of the tenth embodiment. Each module 1330 has a load side comprising a load surface 1333 and a drive side provided with transverse ribs 1340. Each transverse rib 1340 has a first transverse rib drive surface 1339 and a second transverse rib drive surface 1341. Each of the modules 1350 and 1360 has a load side comprising a load surface 1353, 1363, respectively. The joining members 1370 have load surfaces 1373 joining the load surfaces 1333, 1353, 1363 of the modules 1330, 1350, 1360, a generally rectangular box-like shape and a groove 1379 between two legs for increasing the flexibility of the joining member.

The rigid module 1350 is a first link module 1350 having a leading side connected to one of the flexible joining members 1370 and an opposed first link side having several first link elements 1357. Each first link element 1357 comprises a first link opening 1355 for housing a locking rod 1390 and two drive surfaces 1358, 1359 for sprockets of a sprocket wheel. The rigid module 1360 is a second link module 1360 having a trailing side connected to one of the flexible joining members 1370 and an opposed second link side having several second link elements 1367. Each second link element 1367 comprises a second link opening 1365 for housing a locking rod 1390 and two drive surfaces 1368, 1369 for sprockets of a sprocket wheel. To hold the first and second link modules 1350, 1360 together, the first and second link elements 1357, 1367 are intercalated such that the first and second link openings 1355, 1365, respectively, align, and the locking rod 1390 is positioned in the link openings 1355, 1365. Advantageously, a head is formed on the locking rod 1390 to hold it in position. There is a positive connection in the direction of belt travel due to the locking rod 1390. When intercalated, the first and second link elements 1357, 1367 form with their lower portions a transverse rib comprising the drive surfaces 1358, 1359, 1368, 1369.

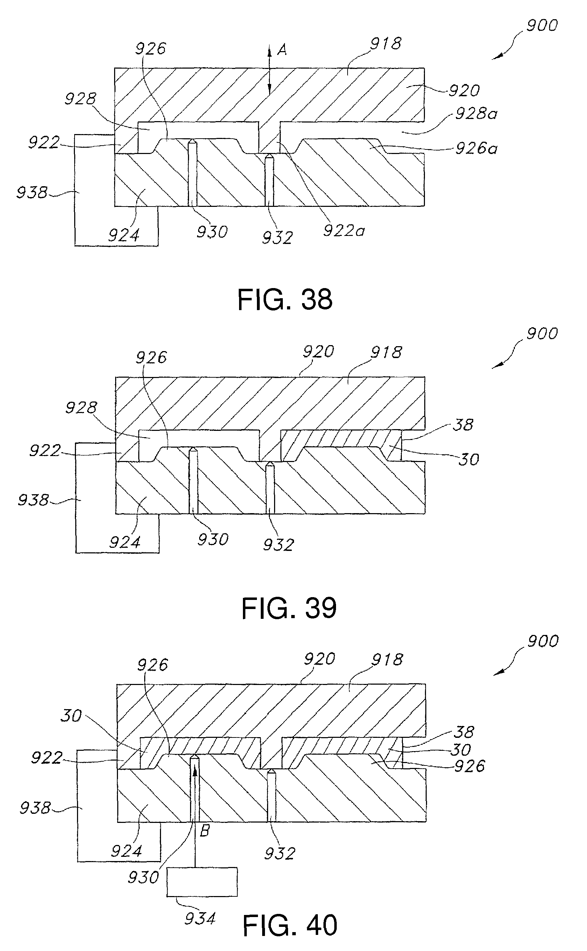

As shown in Figs. 38-43, the above-described modular belts are preferably made in a molding machine 900 (also referred to herein as apparatus). In particular, Figs. 38-43 show the modules 30 described above in connection with the first embodiment 30 being molded and joined to one another in the molding machine 900. The molding machine 900 includes a mold 918. The mold 918 has a first mold member 920 having first and second spacing walls 922, 922a, respectively, and a facing second mold member 924 having first and second protrusions 926, 926a, respectively. As shown in Fig. 38, there is a first cavity 928 defined by the first spacing wall 922, first mold member 920, second mold member 924 and first protrusion 926. A second cavity 928a is defined by the second spacing wall 922a, first mold member 920, second mold member 924 and second protrusion 926a. The first and second cavities 928, 928a, respectively, have the shape of the module 30. The second mold member 924 has a first fill passage 930 that is connected to a thermoplastic material reservoir 934. The second mold member 924 also has a second fill passage 932 connected to an elastic joining member reservoir 936.

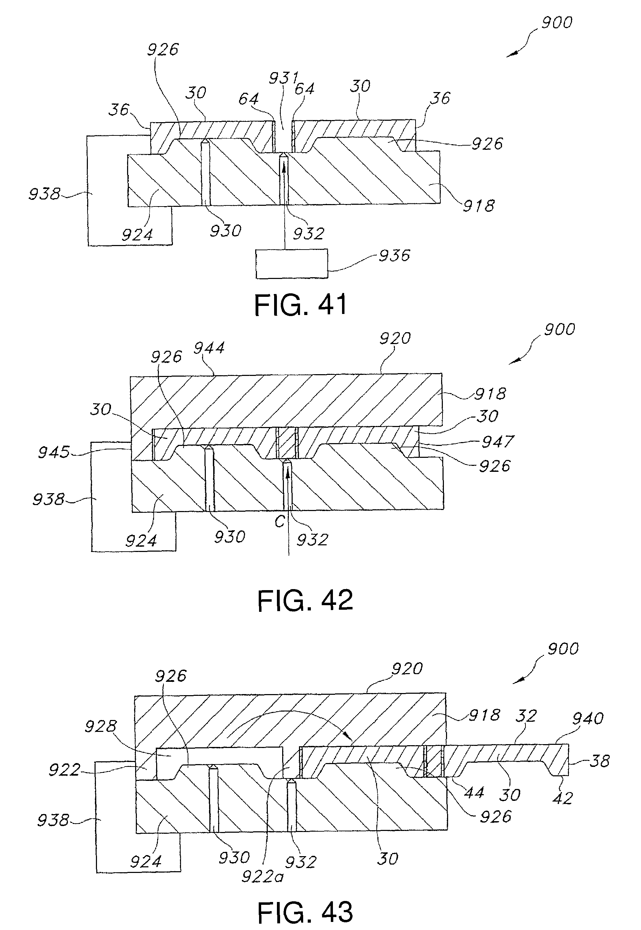

As shown in Fig. 38, the molding process begins with opening the mold 918 such that the first mold member 920 moves in a direction away from the second mold member 924, as indicated by arrow A. The opening and closing of the mold is carried out be a means for opening and closing the mold. Such means for opening and closing the mold include hydraulic systems, indicated generally by reference number 938, and hydraulic systems are well known to those having ordinary skill in the art. There are other means for opening and closing the mold as is well known to those having ordinary skill in the art. The next act is to insert an already made module 30 in the second cavity 928a, as shown in Fig. 39. This is followed by introducing or injecting the above-described thermoplastic material from which the module is made into the first cavity 928 through the first fill passage 930, as indicated by arrow B in Fig. 40. As shown in Fig. 41, after cooling the mold 918 is opened, and there is a space or gap 931 that extends from one module 30 to the other module 30. If needed, the layers 64 are applied to the leading and trailing surfaces 36, 38, respectively, of the modules 30, as shown. The space 931 is narrower after the application of the layers 64.

As shown in Fig. 42, the molding machine 900 also has a third mold member 944 that replaces the first mold member 920 in the next step of making the rodless belt 20. In particular, the third mold member 944 faces the second mold member 924. The third mold member 944 has an outer wall 945, but does not have the above described second spacing wall 922a, as shown in Fig. 42. An elongate module cavity 947 is defined between the third mold member 944 and second mold member 924 and it accommodates two spaced apart modules 930, as shown in Fig. 42. The elongate module cavity 947 advantageously allows the elastic material from which the joining member 52 is made to be introduced or injected through the second fill passage 932, as indicated by arrow C in Fig. 42, into the space 931 after the third mold member 944 has been closed on the second mold member 924. The elastic material from which the joining member 52 is made fills the space 931 and contacts and joins to the layers 64, such that after cooling, the modules 30 shown in Fig. 42 are joined to one another. Next, the mold 918 is opened, and the joined modules 30 are displaced such that the just formed module 30 is positioned in the second cavity 928a, as shown in Fig. 43. In this manner a section 946 of rodless belt 20 is formed. The above-described process is repeated and the first mold member 920 is closed on the second mold member 924 as shown in Fig. 39, and in this manner a section 946 of rodless belt 20 having any desired length is formed. It will be readily apparent that the above described molding process can be used to form the other embodiments of the modular conveyor belts described herein.

The above described modular conveyor belts advantageously reduce the number of rods to one, or to a minimum number for long belts. The invention also provides for modular conveyor belts that advantageously are easy to clean and use. In addition, the elimination of connection modules having rods, or the reduction of such connection modules to a minimum, minimizes the number of gaps and openings in the belt, which advantageously increases the ease with which the modular conveyor belt can be cleaned. In addition, the above-describe molding is advantageously accomplished by one machine 900. It is to be understood that the molding can also be accomplished on two molding machines, wherein the first molding machine forms the modules 30 as described above and the other molding machine (not shown) carries out the molding associated with the third mold member 944 as described above.

In addition, it is to be understood that the modules, for example modules 30, described herein can be formed by molding, extruding and cut to length and machining processes.

It will be appreciated by those skilled in the art that while a modular conveyor belt invention has been described above in connection with particular embodiments and examples, the invention is not necessarily so limited, and other embodiments, examples, uses, and modifications and departures from the described embodiments, examples, and uses may be made without departing from the scope of the claims.

## Claims

1. Modular conveyor belt (20; 120; 220; 320; 420; 520; 620; 820; 1020; 1120; 1220; 1320), comprising:
a rigid first module (30; 130; 330; 430; 630; 830; 1030; 1130; 1230; 1330) with a load side (32) comprising a load surface (33; 1033; 1133; 1233; 1333) and with a drive side comprising a drive surface (46, 48, 139, 141; 1039, 1041; 1139, 1141; 1239, 1241; 1339, 1341) for a sprocket wheel (70; 171);
a rigid second module (30; 130; 330; 430; 631; 830; 1030; 1150, 1160; 1250, 1260; 1350, 1360) with a load side (32) comprising a load surface (33; 1033; 1153, 1163; 1253, 1263; 1353, 1363) and with a drive side comprising a drive surface (46, 48, 139, 141; 1039, 1041; 1158, 1159, 1168, 1169; 1258, 1259, 1268, 1269; 1358, 1359, 1368, 1369) for a sprocket wheel (70; 171);
and a connection part connecting the first module to the second module and comprising a flexible joining member (52; 252; 352; 452; 552; 871; 1070; 1170; 1270; 1370),
**characterized in that**
the connection part comprises a load surface (58; 365; 454; 873; 1073; 1173; 1273; 1373) joining the load surfaces of the first and second modules.

2. Modular conveyor belt (20; 120; 220; 320; 420; 520; 620; 820; 1020; 1120; 1220; 1320) according to claim 1, wherein the load surfaces (33, 58; 365; 454; 873; 1033, 1073; 1133, 1153, 1163, 1173; 1233, 1253, 1263, 1273; 1333, 1353, 1363, 1373) of the first module, the second module and the connection part are in the same plane when the belt runs straight.

3. Modular conveyor belt (20; 120; 220; 320; 420; 520; 620; 820; 1020; 1120; 1220; 1320) according to claim 1 or 2, wherein the joining member (52; 252; 352; 452; 552; 871; 1070; 1170; 1270; 1370) is made of an elastic material, preferably comprising an elastomer.

4. Modular conveyor belt (20; 120; 220; 320; 420; 520; 620; 820; 1020; 1120; 1220; 1320) according to any one of claims 1 to 3, wherein the modules (30; 130; 330; 430; 630, 631; 830; 1030; 1130, 1150, 1160; 1230, 1250, 1260; 1330, 1350, 1360) comprise a hard plastic material, preferably selected from the group comprising polypropylene, polyacetal, polyethylene, and polyamide.

5. Modular conveyor belt (20; 120; 220; 320; 420; 520; 620; 820; 1020; 1120; 1220; 1320) according to any one of claims 1 to 4, wherein the modules (30; 130; 330; 430; 630, 631; 830; 1030; 1130; 1230; 1330) have on their drive sides transverse ribs (33; 1040; 1140; 1240; 1340) comprising at least some of the drive surfaces (46, 48, 139, 141; 1039, 1041; 1139, 1141; 1239, 1241; 1339, 1341).

6. Modular conveyor belt (220; 320; 520; 820; 1020; 1120; 1220; 1320) according to any one of claims 1 to 5, wherein the joining member (252; 352; 552; 871; 1070; 1170; 1270; 1370) has a groove (259; 379; 857; 1079; 1179; 1279; 1379) between a first leg (367; 855; 1077) and a second leg (369; 855; 1078) for increasing the flexibility of the joining member.

7. Modular conveyor belt (20; 120; 220; 320; 420; 520; 620; 820) according to any one of claims 1 to 6, wherein the connection part further comprises a layer (64; 385) connecting the first module (30; 130; 330; 430; 630; 830) to the joining member (52; 252; 352; 452; 552; 871) and another layer (64; 385) connecting the second module (30; 130; 330; 430; 631; 830) to the joining member (52; 252; 352; 452; 552; 871), the layers (64; 385) preferably being adhesive layers (66).

8. Modular conveyor belt (320; 820) according to any one of claims 1 to 7, wherein the modules (330; 830) have an angled leading side (337; 836) and/or an angled trailing side (339; 838).

9. Modular conveyor belt (420) according to any one of claims 1 to 7, wherein the modules (430) comprise a first leading wall (432) and a recessed second leading wall (434) with a leading contact wall (436) extending from the first leading wall (432) to the recessed second leading wall (434), and a first trailing wall (438) and a recessed second trailing wall (440) with a trailing contact wall (442) extending from the first trailing wall (438) to the recessed second trailing wall (440).

10. Modular conveyor belt (620; 1020; 1120; 1220; 1320) according to any one of claims 1 to 9, wherein a first link module (630; 1150; 1250; 1350) has a leading side (36) and an opposed first link side (645) having first link elements (647; 1157; 1257; 1357), the leading side (36) being connected to a joining member (52; 1170; 1270; 1370) and the joining member (52; 1170; 1270; 1370) being connected to another one of the modules (130; 1130; 1230; 1330),
a second link module (631; 1160; 1260; 1360) has a trailing side (38) and an opposed second link side (661) having second link elements (663; 1167; 1267; 1367), the trailing side (38) being connected to a joining member (52; 1170; 1270; 1370) and the joining member (52; 1170; 1270; 1370) being connected to another one of the modules (130; 1130; 1230; 1330),
and wherein the first and second link elements (647, 663; 1157, 1167; 1257, 1267; 1357, 1367) are intercalated to hold the first and second link modules (630, 631; 1150, 1160; 1250, 1260; 1350, 1360) together.

11. Modular conveyor belt (620; 1220; 1320) according to claim 10, wherein the first and second link elements (647, 663; 1257, 1267; 1357, 1367) comprise first and second openings (649, 663; 1255, 1265; 1355, 1365) and are intercalated such that the first and second openings (649, 665; 1255, 1265; 1355, 1365) align and a rod (667; 1290; 1390) is positioned in the aligned first and second openings (649, 665; 1255, 1265; 1355, 1365) to hold the first and second link elements (647, 663; 1257, 1267; 1357, 1367) together.

12. Modular conveyor belt (520) according to any one of claims 1 to 11, wherein the joining member is a flight joining member (552) and wherein the belt further comprises a flight (570) that extends from the joining member (552).

13. Modular conveyor belt (820; 1020; 1120; 1220; 1320) according to any one of claims 1 to 12, wherein at least some of the modules (830; 1030; 1130; 1230; 1330) have a leading side (836; 1036) and/or a trailing side (838; 1038) having structural elements (845, 847, 851, 853; 1035, 1037) providing for a positive connection between the modules and the flexible joining member (871; 1070; 1170; 1270; 1370).

14. Modular conveyor belt (820; 1020; 1120; 1220; 1320) according to any one of claims 1 to 13, wherein at least some of the modules (830; 1030; 1130; 1230; 1330) have a slotted leading side (836; 1036) having first slots (845; 1035) and/or a slotted trailing side (838; 1038) having second slots (851; 1037).

15. Modular conveyor belt (820) according to claim 14, wherein at least some of the modules (830) have a first opening (847) that extends through the module (830) such that the first opening (847) is in communication with the first slots (845) and a second opening (853) that extends through the module (830) such that the second opening (853) is in communication with the second slots (851).

16. Modular conveyor belt (820; 1020; 1120; 1220; 1320) according to claim 14 or 15, wherein an elastic joining material (871; 1070; 1170; 1270; 1370) fills the first slots (845; 1035) and/or the first opening (847) in one of the modules (830; 1030; 1130, 1150, 1160; 1230, 1250, 1260; 1330, 1350, 1360) and the second slots (851; 1037) and/or the second opening (853) in an adjacent module (830; 1030; 1130, 1150, 1160; 1230, 1250, 1260; 1330, 1350, 1360) such that a strong mechanical connection exists between these modules (830; 1030; 1130, 1150, 1160; 1230, 1250, 1260; 1330, 1350, 1360).
